# EUROPÄISCHE PATENTSCHRIFT

(11) **EP 2 090 948 B1**
(45) Veröffentlichungstag und Bekanntmachung des Hinweises auf die Patenterteilung: **03.11.2010**
(21) Anmeldenummer: 08002958.0
(22) Anmeldetag: 18.02.2008
(51) Int. Cl.: G05B 19/042

(54) **Verfahren zum Betrieb eines Automatisierungssystems**
Method for operating an automation system
Procédé de fonctionnement d'un système d'automatisation

(43) Veröffentlichungstag der Anmeldung: 19.08.2009
(73) Patentinhaber: SIEMENS AKTIENGESELLSCHAFT, 80333 München (DE)
(72) Erfinder: Braun, Ulrich, 90431 Nürnberg (DE); Göck, Michael, 90762 Fürth (DE); Leins, Ralf, 75228 Ispringen (DE); Nitzsche, Stefan, 67227 Frankenthal (DE); Thurau, Oliver, 67117 Limburgerhof (DE)

(56) Entgegenhaltungen:
- DE-A1- 10 049 503
- US-A1- 2003 061 349
- US-A1- 2004 181 297
- DALRYMPLE III P W: "MAINTENING FILE SECURITY AND INTEGRITY VIA PDS SYSTEMS" CONTROL SOLUTIONS, PENNWELL PUBLISHING, TULSA, OK, US, Bd. 68, Nr. 6, 1. Juni 1995 (1995-06-01), Seiten 69-75, XP000522565 ISSN: 1074-2328

## Beschreibung

Die Erfindung betrifft ein Verfahren zum Betrieb eines Automatisierungssystems mit einer Mehrzahl kommunikativ verbundener Automatisieruhgsgeräte.

Automatisierungssysteme und darin zusammengefasste Automatisierungsgeräte sind an sich bekannt. Die Anmelderin liefert z. B. die unter der Marke SIMATIC bekannten Automatisierungsgeräte, aber auch komplette Automatisierungslösungen, also Automatisierungssysteme mit derartigen Automatisierungsgeräten, zur Steuerung und/oder Überwachung eines technischen Prozesses.

Wie bereits in der DE 197 40 550 erwähnt ist, sind aus dem Siemens-Katalog ST 70, Ausgabe 1996, Kapitel 3, 4 und 8 als Automatisierungsgeräte eine speicherprogrammierbare Steuerung sowie ein Programmiergerät zum Erstellen eines Steuerprogramms für eine derartige speicherprogrammierbare Steuerung bekannt. Wesentliche Bestandteile dieser speicherprogrammierbaren Steuerung sind Baugruppen für zentrale Aufgaben (CPU-Einheiten) sowie Signal-, Funktions- und Kommunikationsbaugruppen. Die CPU-Einheit der speicherprogrammierbaren Steuerung arbeitet während des Steuerbetriebs zyklisch ein Steuerprogramm ab, welches ein Programmierer mit einem mit einem Software-Werkzeug versehenen Programmiergerät erstellt und welches zur Lösung einer Automatisierungsaufgabe vorgesehen ist. Während der zyklischen Bearbeitung liest die CPU-Einheit zunächst die Signalzustände an allen physikalischen Prozesseingängen ab und bildet ein Prozessabbild der Eingänge. Das Steuerprogramm wird weiter unter Einbeziehung interner Zähler, Merker und Zeiten schrittweise abgearbeitet und schließlich hinterlegt die CPU-Einheit die errechneten Signalzustände im Prozessabbild der Prozessausgänge, von welchem diese Signalzustände zu den physikalischen Prozessausgängen gelangen. Ein Steuerprogramm umfasst gewöhnlich Software-Funktionsbausteine, die einen Betrieb der Signal- und/oder Funktions- und/oder Kommunikationsbaugruppen ermöglichen. Eine dieser Funktionsbaugruppen in Form einer NC-Steuerungsbaugruppe ist zur Steuerung des technologischen Bewegungsablaufs einer Verarbeitungsmaschine einsetzbar. Dazu überträgt die CPU-Einheit, welche üblicherweise Prozesssteuerungsfunktionalitäten verwirklicht, dieser NC-Steuerungsbaugruppe Parameter, z. B. Parameter in Form von Start/Stopp-Koordinaten der zu steuernden Antriebsachsen der Verarbeitungsmaschine. Ferner wählt die CPU-Einheit auf der NC-Steuerungsbaugruppe ablauffähige Verfahrensprogramme aus, die ein Prozessor der NC-Steuerungsbaugruppe zur Steuerung des Bewegungsablaufs einer Verarbeitungsmaschine abarbeitet.

Allgemein ist der Begriff "Automatisierungsgerät" für den Gesamtzusammenhang dieser Beschreibung so auszulegen, dass er sämtliche Geräte, Einrichtungen oder Systeme umfasst, also neben z. B. Steuerungen, wie speicherprogrammierbaren Steuerungen, Prozessrechnern, (Industrie-)Computern und dergleichen, auch Antriebssteuerungen, Frequenzumrichter und Ähnliches, wie sie zur Steuerung, Regelung und/oder Überwachung technischer Prozesse z. B. zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird.

Heute bestehen Großanlagen als Beispiel für eine Kategorie zu steuernder oder zu überwachender technischer Prozesse in der Regel aus einzelnen, verteilten, auch als Teilprozesse auffassbaren Projekten, deren Daten jedoch für das Arbeiten in der Gesamtanlage oder im jeweiligen Unternehmen interessant sind. Dazu gehören neben Daten jeglicher Art insbesondere Konfigurationsdaten und Laufzeitdaten, die über die unterschiedlichen Automatisierungsgeräte hinweg verteilt und auch teilweise mehrfach redundant abgelegt sind. Dieses führt zu einem großen Speicherbedarf und unnötigen Datentransfers, wobei Letztere wiederum in nachteiliger Weise die Verfügbarkeit der jeweils betroffenen Geräte reduzieren. Daneben sind typischerweise viele Konfigurationsdaten über mehrere Projekte in einer Anlage, aber auch über mehrere Anlagen in einem Unternehmen/Konzern gleich oder überlappen in weiten Bereichen (z. B. Benutzerverwaltung, Anlagenwartung, usw.). Dies führt zu Mehrfachkonfiguration von identischen Daten und/oder erfordert eine Synchronisation zwischen den Projekten oder Systemen, die diese Daten nutzen. Durch das Verteilen und Duplizieren der Konfigurations- und Laufzeitdaten auf viele Geräte und den sich danach ergebenden Datentransfers (insbesondere Kopier- und Verschiebe-Operationen) kommt es immer wieder zu Inkonsistenzen, die nur durch ein erneutes Bereitstellen der Daten behoben werden können, was allerdings mit einer erhöhten Netzwerkbelastung für das Automatisierungssystem insgesamt und der zumindest zeitweise gegebenen Nicht-Verfügbarkeit für das oder jedes betroffene Gerät einhergeht. Die vorgenannten Nachteile führen zudem zu einem erheblichen Speicherbedarf, der bei komplexen Automatisierungssystemen oder -geräten bis in den GB-Bereich reichen kann, punktuell zu starken Netzwerkbelastungen und zu hohen bis inakzeptablen Verfügbarkeitseinbußen z. B. beim Abruf von Konfigurationsdaten oder bei der Synchronisation von Laufzeitdaten zwischen Geräten.

Bei einer einfachen zentralen Datenablage der Konfigurations- und Laufzeitdaten entstehen Probleme, wie längere Ladezeiten (z. B. durch Laden der Daten von einem fremden Gerät), mangelnde Verfügbarkeit der Daten durch Netzwerk- oder Gerätefehler, usw., wobei der Aspekt der Verfügbarkeit gerade im Bereich von anlagenübergreifenden Daten, also bei einem unternehmensweiten Zugriff auf die Daten, von besonderer Bedeutung ist.

Die oben skizzierten Probleme werden heute nur unzureichend gelöst, indem die Konfigurations- und Laufzeitdaten auf unterschiedliche Automatisierungsgeräte und über verschiedene Projekte verteilt sind. Jedes Automatisierungsgerät und im Falle von durch ein Automatisierungsgerät ausgeführten Steuerprogrammen, ggf. auch einer Mehrzahl von Steuerprogrammen - Automatisierungsgerät oder Steuerprogramm werden als Abnehmer der hier beschriebenen Daten zusammenfassend auch als Client bezeichnet -, das oder der auf Konfigurations- oder Laufzeitdaten mehrerer Geräte oder Projekte gleichzeitig zugreift, führt damit die Daten der unterschiedlichen Geräte und Projekte selbst zusammen und ist auch für die Konsistenz dieser Daten, z. B. im Falle von Konfigurationsänderungen, selbst verantwortlich.

Eine Aufgabe der Erfindung besteht vor dem Hintergrund der oben skizzierten Nachteile darin, diese soweit wie möglich zu vermeiden oder zumindest deren Auswirkungen zu reduzieren.

Diese Aufgabe wird mit einem Verfahren zum Betrieb eines Automatisierungssystems gelöst, wie in Anspruch 1 definiert. Das Automatisierungssystem umfasst eine Mehrzahl kommunikativ verbundener Automatisierungsgeräte. Von den Automatisierungsgeräten fungiert genau eines als Domain-Controller und dieses Gerät hält in einem Speicher für das Automatisierungssystem und die davon umfassten Automatisierungsgeräte zentral die zu dessen bzw. deren Betrieb erforderlichen Daten vor.

Aus der US 2004/0181297 A1 ist ein Automatisierungssystem mit einer Anzahl dort als Optionsmodul bezeichneter Automatisierungsgeräte bekannt. Von dem Automatisierungssystem ist eine als "File Transfer Subsystem" bezeichnete Einheit umfasst, die zentral Daten zum Update einzelner Optionsmodule empfängt und ggf. vorhält.

Der Domain-Controller hält als zum Betrieb des Automatisierungssystems und der davon umfassten Automatisierungsgeräte erforderliche Daten Konfigurations- und/oder Laufzeitdaten vor. Der Vorteil dieser Ausgestaltung besteht darin, dass die Konfigurations- und Laufzeitdaten der unterschiedlichen Geräte, Projekte oder Systeme ausschließlich an einer zentralen Stelle im Automatisierungssystem, also dem hier und im Folgenden als Domain-Controller bezeichneten Automatisierungsgerät, abgelegt werden. Der Domain-Controller ist ein definiertes Gerät in dem vom Automatisierungssystem umfassten Netzwerk zur kommunikativen Verbindung der einzelnen Automatisierungsgeräte. Zum Betrieb des Automatisierungssystems und der davon umfassten Automatisierungsgeräte erforderliche Daten, insbesondere Laufzeit- und Konfigurationsdaten, werden ausschließlich auf dem Domain-Controller abgelegt. Dies gilt auch, wenn ein Zugriff auf das Automatisierungssystem mit damit nur zeitweise verbundenen Automatisierungsgeräten, wie z. B. Entwicklungssystemen, also einem Programmiergerät oder dergleichen, erfolgt, indem mit einem solchen Entwicklungssystem veränderte Konfigurations- oder Laufzeitdaten ausschließlich an den Domain-Controller übertragen werden. Damit reduziert sich der Speicherbedarf auf allen anderen Geräten. Zudem verringert sich die Netzwerkbelastung während des Übergangs von einer Entwicklungsphase zu einer Betriebsphase des Automatisierungssystems.

Der Domain-Controller führt eine nicht begrenzte Anzahl von Diensten aus, die unabhängig voneinander laufen und jeweils einen bestimmten Bereich von Daten, insbesondere Konfigurations- oder Laufzeitdaten, verwalten, z. B. Daten für eine Benutzerverwaltung. Durch diese Architektur ist sichergestellt, dass der Domain-Controller nicht nur auf leistungsstarken Automatisierungsgeräten, z. B. Personal- oder Industriecomputern, sondern auch auf Geräten mit beschränkten Betriebsmitteln, also z. B. Bediengeräten oder Steuerungen, ablauffähig ist. Das Sicherstellen der Konsistenz der vom Domain-Controller vorgehaltenen Daten wird durch eine zentrale Datenverwaltung und Datenablage (anstelle der bisherigen verteilten Verwaltung und Ablage) vereinfacht. Dies bedeutet, dass alle gemeinsamen Daten auf dem Domain-Controller abgelegt werden und nur noch einzelne gerätespezifische Daten, also Daten, die nur von einem einzelnen Gerät benötigt werden und keiner Synchronisation bedürfen, auf den Automatisierungsgeräten selbst abgelegt werden. Abgesehen von diesen Daten werden auf den vom Automatisierungssystem umfassten Automatisierungsgeräten oder durch davon ausgeführte Steuerungsprogramme (Clients) keine Konfigurations- oder Laufzeitdaten vorgehalten.

Die eingangs genannte Aufgabe wird mit dem in Anspruch 1 definierten Verfahren gelöst, indem bei einem Verfahren zum Betrieb eines Automatisierungssystems der hier beschriebenen Art vorgesehen ist, dass von einem Transfer von Konfigurations- oder Laufzeitdaten von einem Entwicklungssystem an den Domain-Controller eine Konsistenzprüfung umfasst ist, derart, dass zunächst die jeweiligen Daten zum Domain-Controller übertragen werden und der Domain-Controller eine erfolgte Übertragung an das Entwicklungssystem quittiert, daraufhin durch das Entwicklungssystem ein Aktivieren der übertragenen Daten initiiert wird und der Domain-Controller einen sich bei der Aktivierungsvorbereitung ergebenden Status an das Entwicklungssystem zurückliefert und schließlich das Entwicklungssystem in Abhängigkeit vom zurückgelieferten Aktivierungsvorbereitungsstatus die übertragenen Daten zur Verwendung freischaltet. Durch einen derartigen Transfer gelingt eine Konsistenzsicherung der für das Automatisierungssystem und die davon umfassten Automatisierungsgeräte erforderlichen Daten. Dadurch, dass übertragene Daten vor ihrer Verwendbarkeit freigeschaltet werden, ist sichergestellt, dass keine noch im Transfer befindlichen Daten, also z. B. unvollständige Konfigurations- oder Laufzeitdaten, verwendet werden. Dadurch, dass eine Aktivierung übertragener Daten extern initiiert wird und in Abhängigkeit von einem sich dabei ergebenden Status das Freischalten erfolgt, ist sichergestellt, dass nur ordnungsgemäß übertragene Daten im Automatisierungssystem für davon umfasste Automatisierungsgeräte verwendbar sind. Nach der Freischaltung übertragener Daten stehen diese an zentraler Stelle und nur einmal im Automatisierungssystem zum Zugriff durch andere von dem Automatisierungssystem umfasste Automatisierungsgeräte zur Verfügung.

Besonders bevorzugt ist vorgesehen, dass im Zusammenhang mit dem Übertragen neuer Daten stets sichergestellt wird, dass bisher verwendete Daten, die durch die neuen Daten ersetzt werden, so lange verfügbar und verwendbar bleiben, bis die Übertragung der neuen Daten so abgeschlossen ist, dass deren Freischaltung erfolgen kann. Dazu ist vorgesehen, dass beim Übertragen der jeweiligen Daten zum Domain-Controller diese in einen freien Speicherbereich des Domain-Controllers ohne Überschreiben von auf dem Domain-Controller bereits vorhandenen Daten übertragen werden, wobei beim Freischalten der übertragenen Daten ein von korrespondierenden älteren Daten belegter Speicherbereich für eine spätere Überschreibung als frei markiert wird und wobei, wenn im Zusammenhang mit dem Übertragen keine abschließende Freischaltung erfolgt, der von den übertragenen Daten belegte Speicherbereich für eine spätere Überschreibung als frei markiert wird.

Zur Verringerung der Netzwerkbelastung ist gemäß einer bevorzugten Ausführungsform vorgesehen, dass beim Zugriff eines Automatisierungsgerätes auf vom Domain-Controller vorgehaltene Daten, insbesondere Konfigurations- und/oder Laufzeitdaten, entweder auf Seiten des Domain-Controllers oder auf Seiten des jeweiligen Automatisierungsgerätes eine Zwischenspeicherung von bei einem solchen Zugriff angefragten Daten erfolgt.

Besonders bevorzugt ist vorgesehen, dass ein Umfang der Zwischenspeicherung abhängig von einer Art des Zugriffs, von einem Typ des jeweils zugreifenden Automatisierungsgerätes und/oder von einer Struktur der in Zugriff genommenen Daten automatisch ausgewählt wird.

Nachdem zum Zwischenspeichern der in Zugriff genommenen Daten entweder das anfragende oder das liefernde Gerät (Client bzw. Server), also entweder das Automatisierungsgerät oder der Domain-Controller, automatisch eine geeignete Strategie für den jeweiligen Umfang der Zwischenspeicherung auswählt, ist besonders bevorzugt vorgesehen, dass die Zwischenspeicherung sowohl auf dem zugreifenden Automatisierungsgerät oder durch das zugreifende Automatisierungsgerät als auch auf dem oder durch den liefernden Domain-Controller erfolgt, weil auf diese Weise quasi ein Zusammenspiel der jeweils zur Auswahl stehenden Speicherstrategien möglich wird.

Das beschriebene und nachfolgend weiter erläuterte Verfahren ist bevorzugt in Software implementiert. Entsprechend betrifft die Erfindung auch ein Computerprogramm zur Ausführung eines derartigen Verfahrens, das Computerprogrammanweisungen zur Implementierung der einzelnen Verfahrensschritte oder Verfahrensschrittfolgen umfasst, einen Datenträger mit einem solchen Computerprogramm und ein Computersystem, auf dem ein derartiges Computerprogramm geladen ist, also z. B. ein Automatisierungsgerät, das zum Betrieb in einem Automatisierungssystem der hier beschriebenen Art vorgesehen ist, insbesondere einen Domain-Controller.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Darin zeigen:
- FIG 1: ein Automatisierungssystem mit einer Mehrzahl kommu- nikativ verbundener Automatisierungsgeräte,
- FIG 2: einen Teil des Automatisierungssystems gemäß FIG 1 in anderer Darstellung,
- FIG 3: entsprechend der Darstellung in FIG 1 ein Automati- sierungssystem in der von der Erfindung vorgeschlage- nen Konfiguration mit einem Domain-Controller zur zentralen Datenspeicherung,
- FIG 4: eine graphische Veranschaulichung der mit der Erfin- dung verbundenen Vorteile,
- FIG 5: schematisch vereinfacht einen Aspekt eines Verfahrens zum Betrieb des Automatisierungssystems und
- FIG 6: eine schematisch vereinfachte Darstellung des Domain- Controllers.

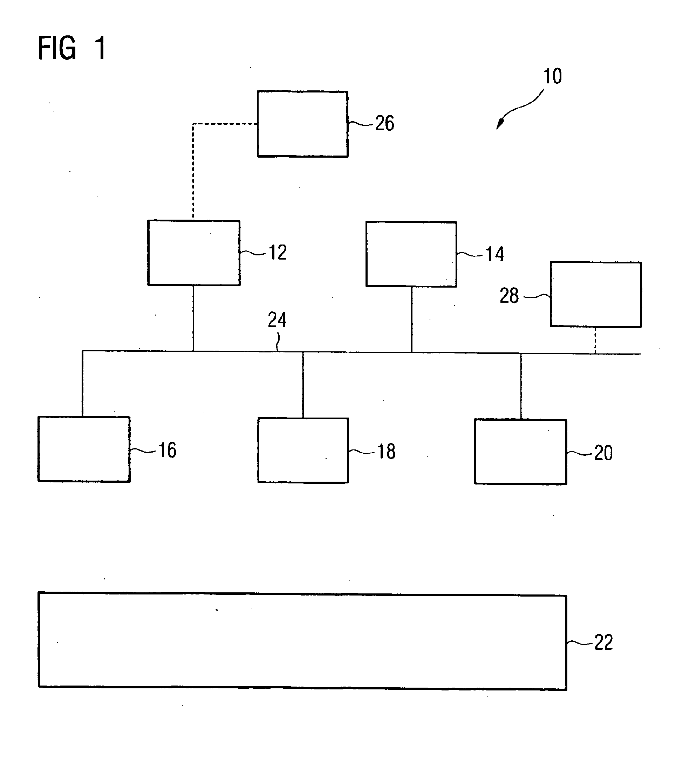

FIG 1 zeigt ein schematisch vereinfacht dargestelltes und insgesamt mit 10 bezeichnetes Automatisierungssystem mit einer Mehrzahl kommunikativ verbundener Automatisierungsgeräte 12, 14, 16, 18, 20. Das Automatisierungssystem 10 oder die davon umfassten Automatisierungsgeräte 12-20 sind in an sich bekannter Art und Weise zur Steuerung und/oder Überwachung eines nicht näher dargestellten technischen Prozesses 22 vorgesehen. Dazu tauscht das Automatisierungssystem 10 mit dem technischen Prozess 22 in ebenfalls an sich bekannter Art und Weise über nicht dargestellte Sensoren und Aktoren Prozesssignale zur Aufnahme von z. B. Zustandsinformationen zum technischen Prozess 22 und Steuersignale zur Beeinflussung des technischen Prozesses 22 aus.

Die kommunikative Verbindung zwischen den Automatisierungsgeräten 12-20 besteht bevorzugt über einen Bus 16, insbesondere einen so genannten Feldbus. Als Entwicklungssystem 26, 28 fungierende Programmiergeräte oder dergleichen sind mit dem Automatisierungssystem 10 z. B. durch einen Anschluss an den Bus 24 oder an eines der Automatisierungsgeräte 12-20 verbindbar.

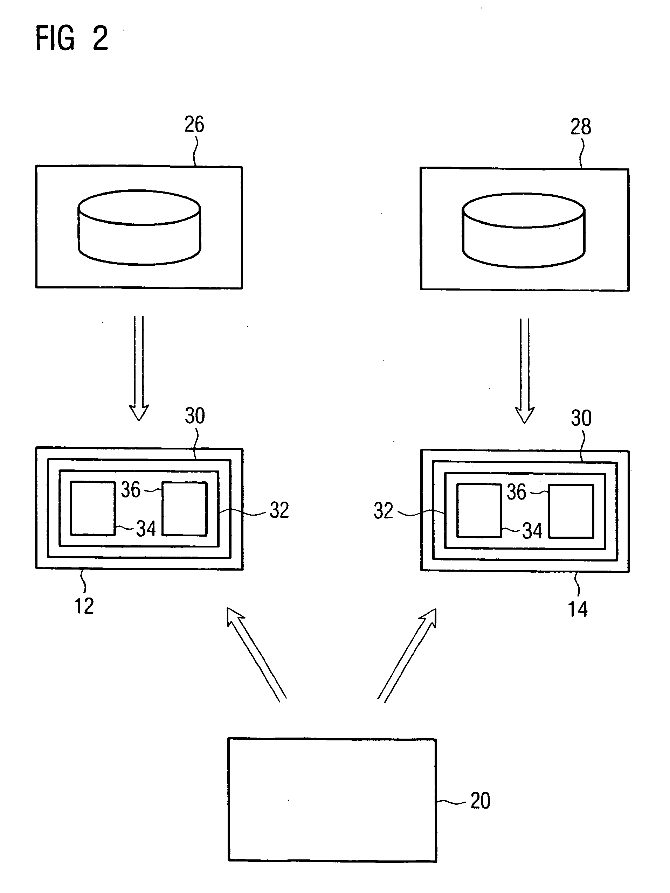

FIG 2 zeigt Teile des Automatisierungssystems 10 gemäß FIG 1 in anderer Darstellung. Gezeigt sind ein erstes und ein zweites Automatisierungsgerät 12, 14, die z. B. zur Steuerung einzelner von dem technischen Prozess 22 (FIG 1) umfasster unabhängiger oder im Wesentlichen unabhängiger Teilprozesse vorgesehen sind und entsprechend auch als erstes und zweites System aufgefasst werden können. Jedes System, also jedes Automatisierungsgerät 12, 14 oder ggf. auch eine Kombination von Automatisierungsgeräten 12-20, hält in einem Speicher 30 zum Betrieb des jeweiligen Systems erforderliche Daten 32 vor. Zu den Daten 32 gehören insbesondere Konfigurations- und Laufzeitdaten 34, 36. Solche Daten 32 werden mit einem Entwicklungssystem 26, 28 eingegeben und gepflegt.

Für ein anderes Automatisierungsgerät 20, das zu seinem Betrieb Konfigurations- und Laufzeitdaten 34, 36 benötigt, kann ein Zugriff auf mehrere Automatisierungsgeräte 12-20, also z. B. ein Zugriff auf das in FIG 2 dargestellte erste und zweite Automatisierungsgerät 12, 14, erforderlich sein. Dies führt zu unnötigen Datenübertragungen in dem Automatisierungssystem 10. Zudem ergibt sich, wenn Teile der Daten 32 in mehreren Automatisierungsgeräten 12-20 abgelegt sind, eine unnötige Belegung von Speicher 30.

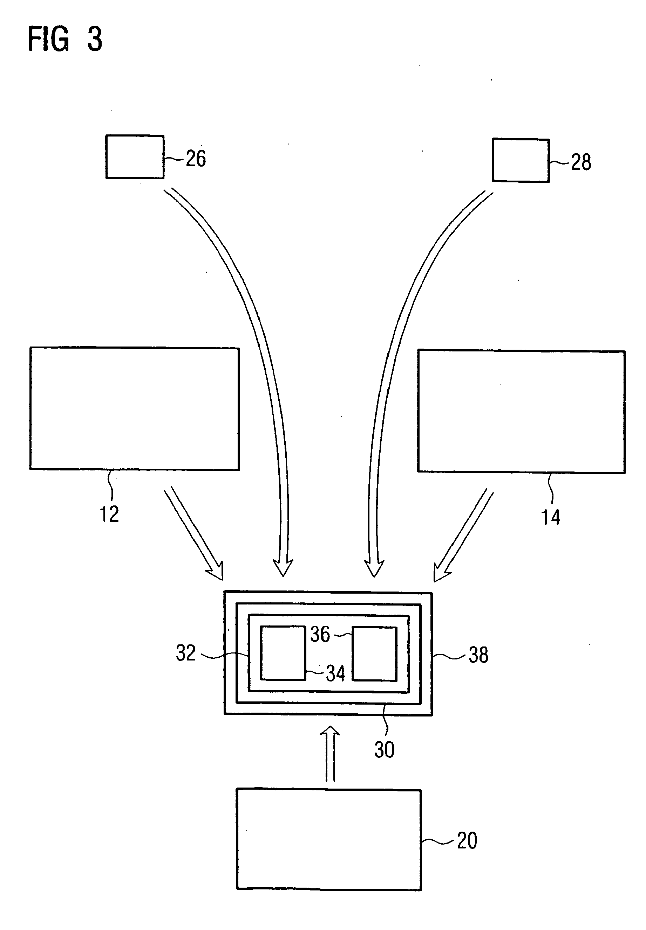

FIG 3 zeigt im Wesentlichen die gleiche Darstellung wie FIG 2, jedoch auf wesentliche Elemente reduziert. Gemäß der Darstellung in FIG 3 entfällt die lokale Speicherung von zum Betrieb der Automatisierungsgeräte 12-20 vorgesehenen Daten 32 und es ist stattdessen eine Speicherung solcher Daten 32 auf einem speziellen Automatisierungsgerät 12-20 vorgesehen, das im Folgenden zur Unterscheidung als Domain-Controller 38 bezeichnet wird. Im Speicher 30 des Domain-Controllers 38 sind für das Automatisierungssystem 10 und die davon umfassten Automatisierungsgeräte 12-20 zentral die zu dessen bzw. deren Betrieb erforderlichen Daten 32, insbesondere Konfigurations- und Laufzeitdaten 34, 36, hinterlegt. Die Daten 32 werden zentral von jedem zur Erstellung oder Veränderung solcher Daten 32 vorgesehenen Entwicklungssystem 26, 28 versorgt. Ebenso kann durch jedes Automatisierungsgerät 12-20 zentral bei dem von dem Automatisierungssystem 10 umfassten genau einen Domain-Controller 38 ein Zugriff auf die Daten 32 erfolgen. Damit sind sowohl eine Mehrfachablage der Daten 32 als auch unnötige Mehrfachdatenübertragungen vermieden. Darüber hinaus entfällt die Notwendigkeit eines Abgleichs der Daten 32, wie dies bei einer Konstellation der in FIG 2 gezeigten Art noch der Fall war.

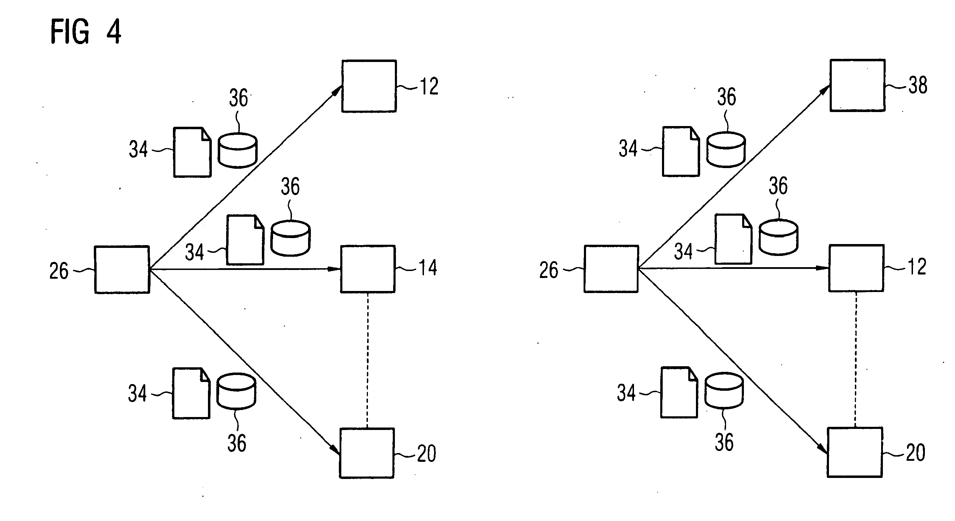

FIG 4 versucht die mit der Erfindung verbundenen Vorteile in einer graphischen Darstellung zu veranschaulichen. Auf der linken Seite ist dabei die bisherige Situation gezeigt, wobei mit einem Entwicklungssystem 26, 28, z. B. einem Programmiergerät, Konfigurations- und/oder Laufzeitdaten 34, 36 für eine Mehrzahl von Automatisierungsgeräten 12-20 gestellt und gepflegt werden. Jedes Automatisierungsgerät 12-20 hält dabei in einem diesem jeweils zugeordneten Speicher die für seinen Betrieb erforderlichen Daten, also insbesondere die Konfigurations- oder Laufzeitdaten 34, 36, lokal vor. Auf der rechten Seite ist demgegenüber der Ansatz gemäß der Erfindung dargestellt. Mit dem Entwicklungssystem 26 werden gleichfalls für das Automatisierungssystem 10 und die davon umfassten Automatisierungsgeräte 12-20 erforderliche Daten, insbesondere Konfigurations- und Laufzeitdaten 34, 36, erstellt und gepflegt. Der Unterschied zu der auf der linken Seite dargestellten Konstellation besteht darin, dass die für das Automatisierungssystem 10 insgesamt und die davon umfassten Automatisierungsgeräte 12-20 zu dessen bzw. deren Betrieb erforderlichen Daten zentral gespeichert werden, und zwar in genau einem dem Automatisierungssystem 10 zugeordneten Domain-Controller 38. In den anderen vom Automatisierungssystem 10 umfassten Automatisierungsgeräten 12-20 werden allenfalls solche Konfigurations- und Laufzeitdaten 34, 36 lokal gespeichert, die ausschließlich für das jeweilige Automatisierungsgerät 12-20 relevant sind.

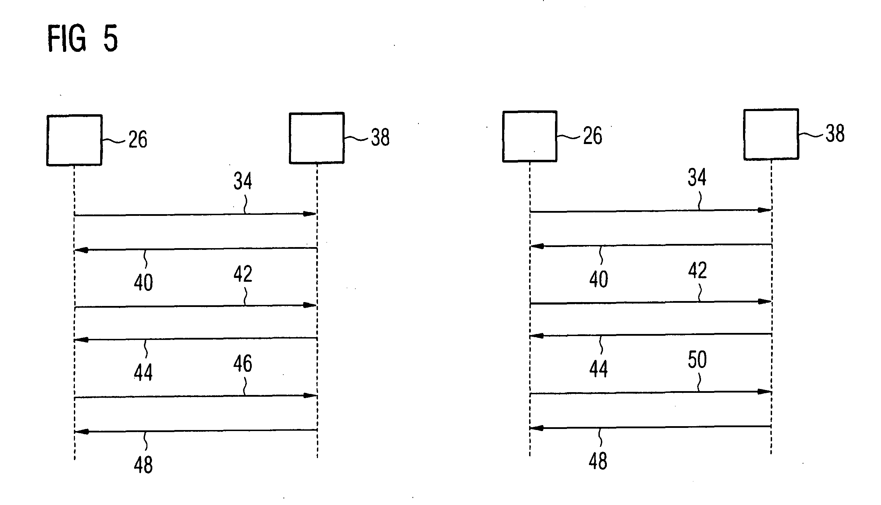

FIG 5 zeigt schematisch vereinfacht einen Aspekt eines Verfahrens zum Betrieb des Automatisierungssystems 10 (FIG 1). Danach wird zum Übertragen von z. B. Konfigurationsdaten 34 von einem Programmiergerät 26 zum Domain-Controller 38 vom Domain-Controller 38 eine erfolgte Übertragung an das Entwicklungssystem 26, 28 durch Übertragen eines Bestätigungssignals 40 quittiert. Das Entwicklungssystem 26, 28 initiiert daraufhin durch Absenden eines Aktivierungssignals 42 ein Aktivieren der übertragenen Daten. Der Domain-Controller 38 liefert daraufhin einen sich bei der Aktivierungsvorbereitung ergebenden Status in Form eines Statussignals 44 an das Entwicklungssystem 26, 28 zurück. Die Initiierung der Aktivierung der übertragenen Daten umfasst auf Seiten des Domain-Controllers 38 eine vollständige Überprüfung der übertragenen Daten, also z. B. eine Plausibilitätsprüfung, einen Checksummentest, usw. Nur wenn sämtliche vorgesehenen Prüfungen eine Fehlerfreiheit der übertragenen Daten anzeigen, kann ein positives Statussignal 44 an das Entwicklungssystem 26, 28 zurückgeliefert werden. Abschließend schaltet das Entwicklungssystem 26, 28 in Abhängigkeit vom zurückgelieferten Aktivierungsvorbereitungsstatus, also in Abhängigkeit vom zurückgelieferten Statussignal 44, die übertragenen Daten zur Verwendung frei, indem ein Freischaltsignal 46 übermittelt wird. Eine erfolgte Freischaltung kann durch den Domain-Controller 38 mit einem Freischaltquittungssignal 48 bestätigt werden.

Auf der rechten Seite ist in FIG 5 zu diesem Verfahrensaspekt eine Konstellation dargestellt, bei der z. B. eine Inkonsistenz der Konfigurationsdaten 34 festgestellt wird, weshalb als Statussignal 44 ein Fehlersignal vom Domain-Controller zurückgeliefert wird, woraufhin das Entwicklungssystem 26, 28 an den Domain-Controller 38 ein Löschanforderungssignal 50 sendet und schließlich der Domain-Controller 38 die übertragenen Daten verwirft. Das Verwerfen der Daten kann mit einem Quittungssignal 48 bestätigt werden.

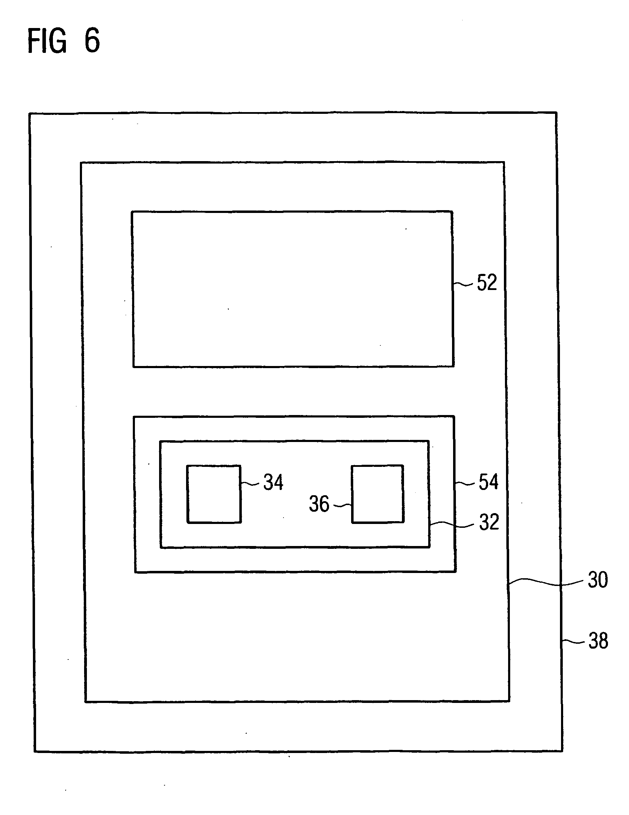

FIG 6 zeigt zu dem anhand von FIG 5 erläuterten Verfahren die dafür vorgesehene Ausführung des Domain-Controllers 38. In dessen Speicher 30 werden zumindest zwei Speicherbereiche 52, 54 gebildet, die zur Unterscheidung als freier Speicherbereich 52 und belegter Speicherbereich 54 bezeichnet werden. Für den belegten Speicherbereich 54 wird angenommen, dass in diesem für das Automatisierungssystem 10 und die davon umfassten Automatisierungsgeräte 12-20 zentral die zu dessen bzw. deren Betrieb erforderlichen Daten 32, insbesondere Konfigurations- und Laufzeitdaten 34, 36, hinterlegt sind. Im ersten Schritt beim Übertragen von Daten von einem Entwicklungssystem 26, 28 zum Domain-Controller 38 werden diese in den freien Speicherbereich 52 ohne Überschreiben von auf dem Domain-Controller 38 bereits vorhandenen Daten 32, also den Daten im belegten Speicherbereich 54, übertragen. Bei Freischalten der übertragenen Daten wird ein von korrespondierenden älteren Daten belegter Speicherbereich 54 für eine spätere Überschreibung als frei markiert. Wenn im Zusammenhang mit dem Übertragen der Daten keine abschließende Freischaltung erfolgt, wird der von den übertragenen Daten belegte Speicherbereich, also der ursprünglich freie Speicherbereich 52, für eine spätere Überschreibung erneut als frei markiert.

Bei einem Zugriff eines Automatisierungsgerätes 12-20 auf die vom Domain-Controller 38 vorgehaltenen Daten 32, insbesondere Konfigurations- und/oder Laufzeitdaten 34, 36, erfolgt entweder auf Seiten des Domain-Controllers 38 oder auf Seiten des jeweiligen Automatisierungsgerätes 12-20 eine Zwischenspeicherung von bei einem solchen Zugriff angefragten Daten und/oder eine Zwischenspeicherung von in Ansehung der angefragten Daten mutmaßlich demnächst angefragten Daten. Ein Umfang der Zwischenspeicherung kann dabei abhängig von einer Art des Zugriffs, von einem Typ des jeweils zugreifenden Automatisierungsgeräts 12-20 und/oder von einer Struktur der in Zugriff genommenen Daten automatisch ausgewählt werden. Eine Zwischenspeicherstrategie, die auf eine Art des Zugriffs basiert, also eine zugriffsspezifische Zwischenspeicherstrategie, basiert auf der Erkenntnis, dass unterschiedliche Zugriffe auf z. B. Konfigurations- oder Laufzeitdaten 34, 36 (wie Anzeige in Listen, Lesen von Einzeldaten oder Schreiben von spezifischen Daten) nur spezifische Anteile aus den Konfigurations- oder Laufzeitdaten 34, 36 benötigen. Dies führt dazu, dass der Zwischenspeichermechanismus die Daten funktionsspezifisch lädt, z. B. bei Listenfunktionen oder Enumerationsfunktionen immer noch weitere Datenblöcke vorhält, während bei Einzeldatenzugriffen auf Eigenschaften bestimmter Objekte das Objekt insgesamt in den Zwischenspeicher geladen wird. Eine gerätespezifische Zwischenspeicherstrategie basiert darauf, dass unterschiedliche auf den Domain-Controller 38 zugreifende Geräte 12-20 aufgrund der Beschränkung ihrer jeweiligen Betriebsmittel nur auf spezielle Konfigurations- oder Laufzeitdaten zugreifen können, sodass der Zwischenspeichermechanismus nur genau die auf das entsprechende Gerät abgestimmten Konfigurations- bzw. Laufzeitdaten 34, 36, also nur einen Teil der Gesamtdaten, vorhält. Eine von einer Struktur der in Zugriff genommenen Daten abhängige strukturspezifische Zwischenspeicherstrategie basiert darauf, dass abhängig von der Struktur der Konfigurations- oder Laufzeitdaten 34, 36 Optimierungen des Zwischenspeichermechanismus möglich sind. Das bedeutet z. B., dass der Zwischenspeicher bei "flachen" Konfigurations- oder Laufzeitdaten 34, 36 Strukturdatenblöcke lädt, deren Größe gerätespezifisch sein kann, während bei strukturierten Daten aus einer technologischen Hierarchie (z. B. Objekte wie Pumpstation, usw.) zugehörige Unterstrukturen (z. B. Pumpen) bis zu einer vorgegebenen oder vorgebbaren Ebene mitgeladen werden, wobei eine solche Tiefe mitgeladener oder mitladbarer Objekte ebenfalls wieder gerätespezifisch sein kann. Eine solche Zwischenspeicherung kann sowohl auf Seiten des zugreifenden Automatisierungsgeräts 12-20 als auch auf Seiten des Domain-Controllers 38 erfolgen. Um im Gesamten eine optimale Zwischenspeicherstrategie zu finden, kann vorgesehen sein, dass alle oben beschriebenen Zwischenspeicherstrategien zusammenspielen. Eine weitere Optimierung ist möglich, wenn auf Seiten des Domain-Controllers 38 ebenfalls als "Cache-Manager" eine Funktionalität zum automatischen Auswählen eines Umfangs der Zwischenspeicherung ausführbar ist, der die entsprechenden Zwischenspeicherstrategien des zugreifenden Gerätes unterstützt.

Als weitergehende, vorteilhafte Aspekte bei der Sicherung der Konsistenz der für das Automatisierungssystem 10 und die davon umfassten Automatisierungsgeräte 12-20 zu dessen bzw. deren Betrieb erforderlichen Daten 32 sind eine Vereinheitlichung der Objektmodelle zwischen den verschiedenen Automatisierungsgeräten 12-20, eine Vereinheitlichung des Datenformates vorgesehen, was in günstiger Weise zu einer Reduzierung des Datenvolumens führt. Bei Bedarf kann der Domain-Controller 38 durch Einsatz eines redundanten Gerätes hochverfügbar gemacht werden. Im Falle eines redundanten Domain-Controllers 38 laufen beide Controller in einem so genannten "Hot Standby Betrieb", was bedeutet, dass es einen aktiven Domain-Controller 38 (Master) und einen passiven Domain-Controller 38 (Slave) gibt. Der aktive Domain-Controller 38 synchronisiert alle Änderungen an den Daten 32 mit dem passiven Domain-Controller 38. Da der Domain-Controller 38 die zentrale Verwaltung der Daten 32, insbesondere der Konfigurations- oder Laufzeitdaten 34, 36, übernimmt, stellt er über eine Zugriffsschicht die Konsistenz der Daten sicher. Die Datenzugriffsschicht kapselt die Daten 32 von den eigentlichen Diensten ab und bietet Methoden zum Erzeugen, Lesen, Schreiben, Verändern und Löschen der Daten 32 an. Die Zugriffsschicht erkennt automatisch über ihre als Schnittstelle zum Zugriff auf die Daten 32 bereitgestellten Methoden Veränderungen der Daten 32 und benachrichtigt die von den Änderungen betroffenen Zwischenspeicher. Der oder jeder insoweit betroffene Zwischenspeicher übernimmt die Änderungen und verwirft gespeicherte Daten abhängig von der gewählten Zwischenspeicherstrategie. Die Konsistenz der Daten 32 wird über die Zugriffsschicht und eine für jedes Entwicklungssystem 26, 28 eindeutig vergebene Kennzeichnung gewährleistet, d. h., jedes Entwicklungssystem 26, 28 garantiert die Konsistenz der von diesen beeinflussten Daten 32. Eine systemübergreifende Konsistenz wird durch die vorgenannte Kennzeichnung gewährleistet. Eine Adressierung von Diensten, Eigenschaften und Daten 32 des Domain-Controllers 38 erfolgt mehrstufig, d. h. voll qualifizierend, da der Domain-Controller 38 Daten 32 verschiedener Systeme (vgl. Beschreibung bei FIG 2) und Projekte unterscheiden muss. Für die Adressierung ist es daher notwendig, dass die Kennzeichnung eindeutig vergeben ist.

Durch den Ansatz gemäß der Erfindung ergeben sich folgende Vorteile: Der Domain-Controller 38 verwaltet zentral Daten 32, wie insbesondere Konfigurations- und Laufzeitdaten 34, 36, von Geräten, Projekten und Systemen (anlagenweit oder unternehmensweit), die gemeinsam genutzt werden. Das mehrfache Duplizieren und Laden der Daten 32 auf jedes Gerät entfällt. Hierbei stehen als zentrale technische Aspekte im Vordergrund zunächst eine strukturierte (optimierte) Ablage der Daten 32 auf dem Domain-Controller 38 für einen effizienten und performanten Zugriff, sodann eine einheitliche systemübergreifende Verwaltung und Adressierung der Daten 32, die einen transparenten Zugriff auf diese (projekt- oder systemübergreifend) ermöglicht, und schließlich eine Erhöhung der Verfügbarkeit des Automatisierungssystems 10 oder davon umfasster Geräte 12-20 durch deutliche Reduktion des zu transportierenden Datenvolumens. Durch eine anlagen- oder unternehmensweite Zentralisierung der Daten 32 auf dem Domain-Controller 38 ist es möglich, bisher im Automatisierungssystem 10 mehrfach gespeicherte (also überlappende Daten 32) beim Transfer an den Domain-Controller 38 zusammenzuführen und damit den Speicherbedarf im Automatisierungssystem zu reduzieren. Eine Zugriffsschicht mit internem Zwischenspeicher sichert die geforderten Reaktionszeiten und den notwendigen Datendurchsatz. Auf Seiten des Domain-Controllers 38 sorgt die Zugriffsschicht zusätzlich für die Konsistenz der Daten 32.

Aus Sicht eines auf die Daten 32 jeweils zugreifenden Gerätes 12-20 ergeben sich durch den zentralen Domain-Controller 38 folgende Vorteile:
schneller, orts-transparenter Zugriff;
eine Konsistenz der Daten 32 wird durch Dienste des Domain-Controllers 38, den Zwischenspeichermechanismus sowie eine einheitliche Zugriffsschicht sichergestellt;
auf dem jeweils zugreifenden Gerät brauchen abgesehen von nur für dieses Gerät relevanten Daten und eventuellen Zwischenspeicherinhalten keine Daten wie Konfigurations- oder Laufzeitdaten vorgehalten werden.

Zusammenfassend lässt sich die vorliegende Erfindung damit kurz wie folgt beschreiben: Es wird ein Verfahren zum Betrieb eines Automatisierungssystems 10 mit einer Mehrzahl kommunikativ verbundener Automatisierungsgeräte 12-20, von denen genau eines als Domain-Controller 38 fungiert und das in einem Speicher 30 für das Automatisierungssystem 10 und die davon umfassten Automatisierungsgeräte 12-20 zentral zu dessen bzw. deren Betrieb erforderliche Daten 32 vorhält, angegeben, sodass eine bisher häufig vorkommende Mehrfachspeicherung solcher Daten 32 unterbleibt, die Daten 32 für alle Automatisierungsgeräte 12-20 an zentraler Stelle zum Zugriff bereitstehen und der Domain-Controller 38 als zentraler Datenserver eine Konsistenz der von ihm verwalteten und bereitgestellten Daten 32 sicherstellt, was auch Zugriffsoptimierungen, wie z. B. geräte-, zugriffs- oder strukturabhängige Zwischenspeicherstrategien, erlaubt.

## Patentansprüche

1. Verfahren zum Betrieb eines Automatisierungssystems mit einer Mehrzahl kommunikativ verbundener Automatisierungsgeräte (12-20), von denen genau eines als Domain-Controller (38) fungiert und in einem Speicher (30) als zum Betrieb des Automatisierungssystems (10) und der davon umfassten Automatisierungsgeräte (12-20) erforderliche Daten zentral Konfigurationsdaten (34) oder Laufzeitdaten (36) vorhält, **dadurch gekennzeichnet,**
**dass** von einem Transfer von Konfigurations- oder Laufzeitdaten (34, 36) von einem Entwicklungssystem (26, 28) an den Domain-Controller (38) eine Konsistenzprüfung umfasst ist, derart, dass
zunächst die jeweiligen Daten zum Domain-Controller (38) übertragen werden und der Domain-Controller (38) eine erfolgte Übertragung an das Entwicklungssystem (26, 28) quittiert,
daraufhin durch das Entwicklungssystem (26, 28) ein Aktivieren der übertragenen Daten initiiert wird und der Domain-Controller (38) einen sich bei der Aktivierungsvorbereitung ergebenden Status an das Entwicklungssystem (26, 28) zurückliefert und
schließlich das Entwicklungssystem (26, 28) in Abhängigkeit vom zurückgelieferten Aktivierungsvorbereitungsstatus die übertragenen Daten zur Verwendung freischaltet.

2. Verfahren nach Anspruch 1, wobei im ersten Schritt beim Übertragen der jeweiligen Daten zum Domain-Controller (38) diese in einen freien Speicherbereich des Domain-Controllers (38) ohne Überschreiben von auf dem Domain-Controller (38) bereits vorhandenen Daten übertragen werden, wobei beim Freischalten der übertragenen Daten ein von korrespondierenden älteren Daten belegter Speicherbereich für eine spätere Überschreibung als frei markiert wird und wobei, wenn im Zusammenhang mit dem Übertragen keine abschließende Freischaltung erfolgt, der von den übertragenen Daten belegte Speicherbereich für eine spätere Überschreibung als frei markiert wird.

3. Verfahren nach Anspruch 1 oder 2, wobei beim Zugriff auf vom Domain-Controller (38) vorgehaltene Daten, insbesondere Konfigurations- und/oder Laufzeitdaten (34, 36), durch ein Automatisierungsgerät (12-20) entweder auf Seiten des Domain-Controllers (38) oder auf Seiten des Automatisierungsgerätes (12-20) eine Zwischenspeicherung von bei einem solchen Zugriff angefragten Daten erfolgt.

4. Verfahren nach Anspruch 3, wobei ein Umfang der Zwischenspeicherung abhängig von einer Art des Zugriffs, von einem Typ des jeweils zugreifenden Automatisierungsgerätes (12-20) und/oder von einer Struktur der in Zugriff genommenen Daten automatisch ausgewählt wird.

5. Verfahren nach Anspruch 3 und 4, wobei die Zwischenspeicherung sowohl auf dem zugreifenden Automatisierungsgerät (12-20) als auch auf dem Domain-Controller (38) erfolgt.

6. Computerprogramm zur Ausführung eines Verfahrens gemäß einem der Ansprüche 1 bis 5.

7. Datenträger mit einem Computerprogramm nach Anspruch 6.

8. Computersystem, auf dem ein Computerprogramm nach Anspruch 6 geladen ist.

## Claims

1. Method for operating an automation system with a plurality of automation devices (12-20) connected for communication with each other, of which precisely one functions as a domain controller (38) and configuration data (34) or runtime data (36) is held centrally in a memory (30), as the data required for operation of the automation system (10) and the automation devices (12-20) that it includes, **characterised in that,**
transfer of configuration or runtime data (34, 36) from a development system (26, 28) to the domain controller (38) includes a consistency check, such that
initially the respective data is transmitted to the domain controller (38) and the domain controller (38) confirms a completed data transmission to the development system (26, 28),
an activation of the transmitted data is then initiated by the development system (26, 28) and the domain controller (38) returns a status produced during the activation preparation to the development system (26, 28) and
finally the development system (26, 28) releases the transmitted data for use depending on the activation preparation status returned.

2. Method according to claim 1 whereby, when the respective data is transferred in the first step to the domain controller (38), this data is transmitted into a free memory area of the domain controller (38) without overwriting data already present on the domain controller (38), whereby, on release of the transmitted data, a memory area occupied by corresponding older data is marked as free for subsequent overwriting and whereby, if there is no final release in conjunction with the transmission, the memory area occupied by the transmitted data is marked as free for subsequent overwriting.

3. Method according to claim 1 or 2 whereby, on access to the data held by the domain controller (38), especially configuration and/or runtime data (34, 36), data requested by an automation device (12-20) during such an access is buffered either on the domain controller (38) side or on the automation device (12-20) side.

4. Method according to claim 3, with a scope of buffering being selected automatically as a function of the type of access, a type of the respective automation device (12-20) accessing the data and/or on a structure of the data being accessed.

5. Method according to claim 3 and 4, with the data being buffered both on the automatation device (12-20) accessing it and also on the domain controller (38).

6. Computer program for executing a method according to one of claims 1 to 5.

7. Data carrier with a computer program according to claim 6.

8. Computer system, on which a computer program according to claim 6 is loaded.

## Revendications

1. Procédé pour faire fonctionner un système d'automatisation, comprenant une multiplicité d'appareils (12 à 20 ) d'automatisation reliés en communication, dont l'un précisément fonctionne en domain-controller ( 38 ) et présente dans une mémoire ( 30 ), comme données nécessaires au fonctionnement du système ( 10 ) d'automatisation et aux appareils ( 12 à 20 ) d'automatisation qui l'englobent centralement des données ( 34 ) de configuration ou des données ( 36 ) de temps de fonctionnement,
**caractérisé**
**en ce qu'**un contrôle de conformité est englobé par un transfert de données ( 34, 36 ) de configuration ou de temps de fonctionnement d'un système ( 26, 28 ) de développement au domain-controller ( 38 ), de manière à ce que
les données respectives soient transmises d'abord au domain-controller ( 38 ) et à ce que le domain-controller ( 38 ) accuse réception au système ( 26, 28 ) de développement qu'une transmission a été effectuée,
puis une activation des données transmises est lancée par le système ( 26, 28 ) de développement et le domain-controller ( 38 ) refournit au système ( 26, 28 ) de développement un statut se produisant lors de la préparation de l'activation et enfin, le système ( 26, 28 ) de développement libère à l'utilisation les données transmises en fonction du statut de préparation de l'activation, qui a été fourni en retour.

2. Procédé suivant la revendication 1, dans lequel, dans le premier stade, lors de la transmission des données respectives au domain-controller ( 38 ), celles-ci sont transmises dans un domaine de mémoire libre du domain-controller ( 38 ), sans écrasement de données déjà présentes sur le domain-controller ( 38 ), dans lequel, lors de la libération des données transmises, un domaine de mémoire occupé par des données correspondantes plus anciennes est repéré comme libre pour un écrasement ultérieur, et dans lequel, lorsque, en relation avec la transmission, il ne s'effectue pas de libération ensuite le domaine de mémoire occupé par les données transmises est repéré comme libre pour un écrasement ultérieur.

3. Procédé suivant la revendication 1 ou 2, dans lequel, lors de l'accès à des données présentées par le domain-controller ( 38 ), notamment des données ( 34, 36 ) de configuration et/ou de durée de fonctionnement, il s'effectue par un appareil ( 12 à 20 ) d'automatisation, soit du côté du domain-controller ( 38 ), soit du côté de l'appareil ( 12 à 20 ) d'automatisation, une mémorisation intermédiaire de données demandées par un accès de ce genre.

4. Procédé suivant la revendication 3, dans lequel on choisit automatiquement une étendue de la mémorisation intermédiaire en fonction d'un type de l'accès d'un type de l'appareil ( 12 à 20 ) d'automatisation accédant respectivement et/ou d'une structure des données prises dans l'accès.

5. Procédé suivant la revendication 3 et 4, dans lequel la mémorisation intermédiaire s'effectue à la fois sur l'appareil ( 12 à 20 ) d'automatisation accédant et sur le domain-controller ( 38 ) .

6. Programme informatique, pour l'exécution d'un procédé suivant l'une des revendications 1 à 5.

7. Support de données comprenant un programme informatique suivant la revendication 6.

8. Système informatique, sur lequel un programme informatique, suivant la revendication 6, est chargé.
